# EUROPÄISCHE PATENTSCHRIFT

(11) **EP 2 765 338 B1**
(45) Veröffentlichungstag und Bekanntmachung des Hinweises auf die Patenterteilung: **06.03.2019**
(21) Anmeldenummer: 14151271.5
(22) Anmeldetag: 15.01.2014
(51) Int. Cl.: F16H 61/04, F16H 61/688, B60K 6/547, B60W 30/19, B60W 10/08, B60W 10/113, B60W 10/06

(54) **Verfahren zum Betreiben eines hybridisierten Doppelkupplungsgetriebe-Antriebsstranges**
Method for operating a hybrid double clutch transmission drive train
Procédé destiné au fonctionnement d'une chaîne cinématique hybridée de boîte de vitesses à double embrayage

(30) Priorität: 12.02.2013 DE 102013002330
(43) Veröffentlichungstag der Anmeldung: 13.08.2014
(73) Patentinhaber: Magna PT B.V. & Co. KG, 74199 Untergruppenbach (DE)
(72) Erfinder: Hoffmeister, Thomas, 70825 Korntal-Münchingen (DE); Matusche, Ingo, 74199 Untergruppenbach (DE); Stepper, Thorsten, 74638 Waldenburg (DE)
(74) Vertreter: Rausch, Gabriele

(56) Entgegenhaltungen:
- EP-A1- 1 559 603
- EP-A1- 1 714 817
- EP-A1- 2 279 922
- WO-A1-2008/031389
- DE-A1-102008 041 565

## Beschreibung

Die vorliegende Erfindung betrifft ein Verfahren zum Betreiben eines hybridisierten Doppelkupplungsgetriebe-Antriebsstranges, der einen Verbrennungsmotor, eine Doppelkupplungsanordnung mit einer ersten und einer zweiten Reibkupplung, ein erstes Teilgetriebe, ein zweites Teilgetriebe sowie eine elektrische Maschine aufweist, die an den Eingang von einem der Teilgetriebe angebunden oder damit verbindbar ist.

Ein derartiger Doppelkupplungsgetriebe-Antriebsstrang ist beispielsweise aus dem Dokument DE 10 2010 044 618 A1 bekannt. Der Leistungsstrang beinhaltet ein Doppelkupplungsgetriebe, das zwei Leistungsübertragungspfade aufweist, so dass Gangwechsel ohne Zugkrafteinbruch durchführbar sind. Dabei wird das von dem Verbrennungsmotor bereitgestellte Antriebsmoment durch überschneidende Betätigung von einem Leistungsübertragungspfad auf den anderen zugkraftunterbrechungsfrei übergeben.

Ferner ist es bekannt, Antriebsstränge für Kraftfahrzeuge zu hybridisieren. Dies beinhaltet generell die Bereitstellung wenigstens einer elektrischen Maschine, die in der Regel als elektrischer Motor oder als elektrischer Generator arbeiten kann. In dem Betriebsmodus als elektrische Maschine kann zusätzliches Antriebsmoment bereitgestellt werden. In dem Betriebsmodus als elektrischer Generator kann die elektrische Maschine rekuperierend arbeiten, um beispielsweise im Schubbetrieb elektrische Energie zum Laden eines Energiespeichers zu gewinnen. Generell ist es in derartigen Antriebssträngen bekannt, eine elektrische Maschine zwischen dem Antriebsmotor und dem Doppelkupplungsgetriebe anzuordnen. Bei dem oben beschrieben Hybrid-Antriebsstrang ist die elektrische Maschine jedoch innerhalb des Doppelkupplungsgetriebes zumindest zeitweise mit einem Eingang von einem der Teilgetriebe verbunden, ist also in Leistungsflussrichtung hinter der zugeordneten Reibkupplung angebunden. Hierdurch liegt ein Summenpunkt von Antriebsmotor und elektrischer Maschine nicht vor dem Eingang der Doppelkupplungsanordnung sondern im Getriebe. Hierdurch können die Schaltabläufe eines konventionellen Doppelkupplungsgetriebes ergänzt werden.

Mit einem Antriebsstrang der beschriebenen Art ist ein konventioneller Betrieb möglich, bei dem nur der Verbrennungsmotor aktiv ist, die elektrische Maschine jedoch nicht an den Antriebsmotor angebunden ist oder mitgeschleppt wird. Ferner ist ein hybridischer Betriebsmodus möglich, bei dem Antriebsleistung sowohl von dem Antriebsmotor als auch von der elektrischen Maschine bereitgestellt wird. Schließlich ist auch ein rein elektrischer Antrieb möglich, bei dem der Verbrennungsmotor abgeschaltet ist (also in der Regel steht). Hierbei sind die Reibkupplungen des Doppelkupplungsgetriebes in der Regel geöffnet, damit der Verbrennungsmotor nicht mitgeschleppt werden muss.

Im rein elektrischen Antriebsmodus können die herkömmlichen Schaltabläufe eines Doppelkupplungsgetriebes nicht angewendet werden, da sich die elektrische Maschine auf der Sekundärseite der zugeordneten Reibkupplung befindet.

Aus dem o.g. Dokument DE 10 2010 044 618 A1 ist es bekannt, bei einem rein elektrischen Antrieb über einen aktiven Leistungsübertragungspfad während eines Gangwechsels ein Füllmoment über den anderen passiven Leistungsübertragungspfad zu übertragen.

Hierdurch kann ein Zugkrafteinbruch oder ein Schubkrafteinbruch während eines Gangwechsels im rein elektrischen Antriebsmodus verringert werden.

Ferner ist es aus dem Dokument DE 10 2007 055 831 A1 bekannt, in einem Hybrid-Antriebsstrang mit einem automatisierten Schaltgetriebe ausgehend von einem elektrischen Betrieb den Start des Verbrennungsmotors mit einem Gangwechsel des Schaltgetriebes zu koordinieren. Hierzu wird ein Drehmoment am Getriebeeingang abgesenkt und ein Schleppmoment auf den Verbrennungsmotor ausgeübt, so dass ein eingelegter Gang ausgelegt und der Verbrennungsmotor bereits vor Erreichen einer Schaltpause gestartet werden kann.

Bei einem hybridischen Betrieb eines gattungsgemäßen Doppelkupplungsgetriebes, bei dem der Verbrennungsmotor über einen der Leistungsübertragungspfade Antriebsmoment bereitstellt und bei dem die elektrische Maschine über den anderen Leistungsübertragungspfad Antriebsmoment bereitstellt, kann es sinnvoll oder notwendig sein, in dem Teilgetriebe, das der elektrischen Maschine zugeordnet ist, einen Gangwechsel durchzuführen. Dies führt im Regelfall zu einer Unterbrechung des von der elektrischen Maschine zusätzlich aufgebrachten Antriebsmomentes, da das zugeordnete Teilgetriebe für einen Gangwechsel lastfrei zu stellen ist.

Ferner ist es aus dem Dokument EP 1 559 603 A1 bekannt, beim Hochschalten eines Parallelschaltgetriebes mit zwei Eingangswellen und zwei Teilgetrieben eine Elektromaschine mit einer der Eingangswellen drehfest zu verbinden. Das von der Elektromaschine erzeugte Boostmoment während einer Phase, während der die Drehzahl des Antriebsmotors beim Schalten von einem alten Gang in einen neuen, höheren Gang absinkt, wird zumindest annähernd durch das infolge der Drehzahlabsenkung von dem Antriebsmotor erzeugte Moment ersetzt.

Das Dokument EP 1 714 817 A1 offenbart ein Hybrid-Doppelkupplungsgetriebe, das eine erste Antriebseinheit und eine zweite Antriebseinheit aufweist. Die erste Antriebseinheit ist mit der Eingangsseite der Doppelkupplungsanordnung verbunden. Die zweite Antriebseinheit ist mit einer der Eingangswellen oder mit einer Ausgangswelle verbunden.

Ferner offenbart das Dokument WO 2008/031389 A1 ein Verfahren zum Betreiben eines Hybridantriebsstranges für ein Kraftfahrzeug, wobei der Hybridantriebsstrang eine Doppelkupplungsanordnung aufweist, die eingangsseitig mit einem Verbrennungsmotor verbunden ist und die ausgangsseitig mit zwei Eingangswellen einer Getriebeanordnung verbunden ist. Eine elektrische Maschine ist an eine Eingangswelle angebunden. Bei einem in diesem Dokument beschriebenen Verfahren zum Betreiben eines solchen Hybridantriebsstranges wird zunächst ein erster Gang eingelegt und mittels einer Verbrennungsmaschine über eine erste Kupplung Drehmoment an eine erste Getriebeeingangswelle angelegt. Anschließend wird bei geöffneter zweiter Kupplung ein erster zweiter Gang eingelegt und mittels der elektrischen Maschine über die erste Getriebeeingangswelle und den ersten zweiten Gang ein Drehmoment an die Getriebeausgangswelle angelegt. Ferner wird an der ersten Kupplung ein Kupplungsschlupf aufgebaut, wobei das von der ersten Kupplung übertragene Drehmoment reduziert wird, während das von der elektrischen Maschine aufgebrachte Drehmoment erhöht wird. Danach wird das von der elektrischen Maschine aufgebrachte Drehmoment in etwa auf Null reduziert und ein zweiter zweiter Gang eingelegt, während der Schlupf an der ersten Kupplung reduziert wird. Schließlich wird mittels der elektrischen Maschine über die erste Getriebeeingangswelle und den zweiten zweiten Gang ein Drehmoment auf die Getriebeausgangswelle übertragen.

Das Dokument EP 2 279 922 A1 offenbart einen weiteren Hybridantriebsstrang.

Vor diesem Hintergrund ist es eine Aufgabe der Erfindung, ein verbessertes Verfahren zum Betreiben eines hybridisierten Doppelkupplungsgetriebe-Antriebstranges anzugeben
Diese Aufgabe wird gelöst durch ein Verfahren mit den Merkmalen des Anspruchs 1, zum Betreiben eines hybridisierten Doppelkupplungsgetriebe-Antriebsstranges, der einen Verbrennungsmotor, eine Doppelkupplungsanordnung mit einer ersten und einer zweiten Reibkupplung, ein erstes Teilgetriebe, das eine Mehrzahl von Gangstufen beinhaltet, ein zweites Teilgetriebe das eine Mehrzahl von Gangstufen beinhaltet, sowie eine elektrische Maschine aufweist, die an den Eingang von einem der Teilgetriebe angebunden oder damit verbindbar ist, wobei
in einem hybridischen Betrieb, bei dem (i) Antriebsleistung von der elektrischen Maschine über das eine Teilgetriebe übertragen wird, (ii) Antriebsleistung von dem Verbrennungsmotor über das andere Teilgetriebe übertragen wird, wobei die dem anderen Teilgetriebe zugeordnete Reibkupplung geschlossen ist, und (iii) die dem einen Teilgetriebe zugeordnete Reibkupplung geöffnet ist, eine Quellgangstufe in dem einen Teilgetriebe ausgelegt wird, mit den Schritten: Schließen der dem einen Teilgetriebe zugeordneten Reibkupplung, so dass diese Reibkupplung ein Drehmoment übertragen kann, das dem von der elektrischen Maschine bereitgestellten Antriebsmoment entspricht, und Auslegen der Quellgangstufe in dem einen Teilgetriebe.

Bei dem Doppelkupplungsgetriebe-Antriebsstrang ist die elektrische Maschine an den Eingang von einem der Teilgetriebe bzw. auf der Sekundärseite der zugeordneten Reibkupplung angebunden, beispielsweise über einen Radsatz. Der Radsatz kann beispielsweise ein Gangradsatz dieses Teilgetriebes sein. Ferner ist es möglich, die elektrische Maschine über eine weitere Kupplung mit dem Eingang des Teilgetriebes zu verbinden. Im letzteren Fall wird für das erfindungsgemäße Verfahren davon ausgegangen, dass diese weitere Kupplung geschlossen ist.

Das erfindungsgemäße Verfahren geht aus von einem hybridischen Betrieb, bei dem beispielsweise im Zugbetrieb ein "Boost"-Modus eingerichtet ist, bei dem nicht nur der Verbrennungsmotor Antriebsleistung auf eine Antriebsachse überträgt, sondern zusätzlich die elektrische Maschine Antriebsmoment bereitstellt, um ein vom Fahrer angefordertes Wunschmoment zu erreichen. Die elektrische Maschine wird dabei vorzugsweise in Drehzahlbereichen betrieben, die identisch oder (über die Anbindungs-Übersetzung) angepasst sind an die Drehzahlen, die der Verbrennungsmotor bereitstellen kann. Bei Bereitstellung von Verbrennungsmotor-Antriebsleistung über den einen Leistungsübertragungspfad kann es vorkommen, dass aufgrund der Übersetzungen in dem anderen Leistungsübertragungspfad ein Gangwechsel vorzunehmen ist. Das vorliegende Verfahren ermöglicht zunächst, eine Quellgangstufe in dem der elektrischen Maschine zugeordneten Teilgetriebe auszulegen, um dann ggf. eine Zielgangstufe schnell einzulegen. Dabei wird durch das erfindungsgemäße Verfahren erreicht, dass das zweite Teilgetriebe zum Auslegen der Quellgangstufe nicht dadurch lastfrei gestellt wird, dass das Moment der elektrischen Maschine abgesenkt wird, sondern dadurch, dass die diesem Teilgetriebe zugeordnete Reibkupplung zumindest teilweise geschlossen wird. Hierdurch ist es möglich, für einen längeren Zeitraum ein gewisses Unterstützungsmoment durch die elektrische Maschine bereitzustellen, wobei das von der elektrischen Maschine für diesen Fall bereitgestellte Drehmoment dann über die beiden Reibkupplungen und den anderen Leistungsübertragungspfad übertragen wird. Diese Maßnahme kann folglich im Zugbetrieb zu sportlicheren Beschleunigungen führen. Ferner ergibt sich ein erhöhter Komfort und eine höhere Dynamik. Durch das länger anstehende höhere Drehmoment an der Antriebsachse werden subjektiv kürzere Schaltzeiten erreicht.

Das erfindungsgemäße Verfahren ist sowohl auf Zughochschaltungen anwendbar als auch auf Zugrückschaltungen. Bei Zughochschaltungen ist die in dem anderen Teilgetriebe eingelegte Gangstufe vorzugsweise eine höhere Gangstufe als die Quellgangstufe, und besonders bevorzugt auch eine Gangstufe höher als eine Zielgangstufe. Bei Zugrückschaltungen ist die in dem anderen Teilgetriebe eingelegte Gangstufe vorzugsweise größer als die Quellgangstufe, insbesondere auch größer als die Zielgangstufe.

Das erfindungsgemäße Verfahren beinhaltet also vorzugsweise die Schritte, nach dem Auslegen der Quellgangstufe eine Zielgangstufe in dem einen Teilgetriebe einzulegen, wobei während des Gangwechsels in dem einen Teilgetriebe Antriebsleistung von dem Verbrennungsmotor über das andere Teilgetriebe übertragen wird.

Dabei ist es bevorzugt, wenn die von dem Verbrennungsmotor über das andere Teilgetriebe übertragene Antriebsleistung größer ist als 20 % der Maximalleistung des Verbrennungsmotors, insbesondere größer als 40 % der Maximalleistung.

Die Maßnahme, ausgehend von einem hybridischen Betrieb eine Quellgangstufe in dem einen Teilgetriebe auszulegen, und zwar auf die erfindungsgemäße Art und Weise, kann auch dazu verwendet werden, um eine Lastpunktverschiebung für den Verbrennungsmotor hervorzurufen, ohne dass in dem einen Teilgetriebe eine Zielgangstufe eingelegt wird.

Bei dem erfindungsgemäßen Schritt des Schließens der Reibkupplung versteht sich, dass die Reibkupplung mittels geeigneter Aktuatorik so angesteuert wird, dass diese ein bestimmtes Moment bereitstellt, wozu die Reibkupplung in der Regel schlupfend betrieben wird. Ein Schließen der Reibkupplung kann vorliegend folglich sowohl bedeuten, dass die Reibkupplung auf das maximal übertragbare Moment geschlossen wird (quasi kraftschlüssig) oder aber so angesteuert wird, dass sie ein bestimmtes Moment übertragen kann, das kleiner ist als dieses Maximalmoment, also in der Regel schlupfend betrieben wird.

Die Aufgabe wird somit vollkommen gelöst.

Gemäß einer besonders bevorzugten Ausführungsform wird nach dem Auslegen der Quellgangstufe das von der elektrischen Maschine bereitgestellte Antriebsmoment verändert, bis die Drehzahl am Eingang des einen Teilgetriebes an die Drehzahl am Eingang des anderen Teilgetriebes angepasst ist.

Die Maßnahme führt zu einer Annäherung der Drehzahlen an einer Zielgangstufe, so dass anschließend eine Zielgangstufe auf einfachere Weise einzulegen ist. Bei Hochschaltungen in dem einen Teilgetriebe wird das von der elektrischen Maschine bereitgestellte Antriebsmoment dabei vorzugsweise verringert. Bei Rückschaltungen wird das von der elektrischen Maschine bereitgestellte Antriebsmoment vorzugsweise erhöht, bis die Drehzahlanpassung erfolgt ist.

Gemäß einer weiteren bevorzugten Ausführungsform wird oder bleibt nach dem Auslegen der Quellgangstufe die dem einen Teilgetriebe zugeordnete Reibkupplung weiter geschlossen, bis die Drehzahl am Eingang des einen Teilgetriebes an die Drehzahl am Eingang des anderen Teilgetriebes angepasst ist.

Auch diese Maßnahme trägt alternativ oder zusätzlich dazu bei, eine Drehzahlannäherung an einer Zielgangstufe zu ermöglichen. In beiden Fällen kann bis zu der Drehzahlanpassung von der elektrischen Maschine ein Antriebsmoment bereitgestellt werden.

In beiden Fällen ist es von Vorteil, wenn am Ende oder nach Erreichen der Drehzahlanpassung die dem einen Teilgetriebe zugeordnete Reibkupplung geöffnet wird und das von der elektrischen Maschine bereitgestellte Antriebsmoment reduziert wird, so dass das Einlegen einer Zielgangstufe in dem einen Teilgetriebe möglich wird.

Dieser Schritt ermöglicht es, das eine Teilgetriebe auf einer Zieldrehzahl zu halten, so dass das Einlegen der Zielgangstufe mit hohem Komfort möglich wird.

Dabei ist es von Vorteil, wenn mit dem oder nach dem Reduzieren des von der elektrischen Maschine bereitgestellten Antriebsmoments die Drehzahl der elektrischen Maschine auf eine der Synchrondrehzahl für die Zielgangstufe entsprechende Drehzahl reduziert wird und anschließend die Zielgangstufe in dem einen Teilgetriebe eingelegt wird.

Dadurch, dass das eine Teilgetriebe im Bereich der Zielgangstufe lastfrei gestellt wird, ist es möglich, die Drehzahl der elektrischen Maschine so verändern, dass sich die Drehzahlen von Eingangsglied und Ausgangsglied der Zielgangstufe zugeordneten Schaltkupplung anpassen, so dass die Zielgangstufe komfortabel eingelegt werden kann.

Hierbei ist es ferner vorteilhaft, wenn nach dem Einlegen der Zielgangstufe in dem einen Teilgetriebe das von der elektrischen Maschine bereitgestellte Antriebsmoment auf ein Zielmoment erhöht wird.

Durch das anschließende Erhöhen auf das Zielmoment kann nach dem Gangwechsel in dem einen Teilgetriebe wiederum das von dem Fahrer angeforderte Wunschmoment bereitgestellt werden, das sich zusammensetzt aus dem Antriebsmoment des Verbrennungsmotors und dem Zielmoment der elektrischen Maschine.

Gemäß einer weiteren bevorzugten Ausführungsform, die insbesondere bei Zugrückschaltungen anwendbar ist, wird nach dem Auslegen der Quellgangstufe das von der elektrischen Maschine bereitgestellte Antriebsmoment erhöht, um die Drehzahl am Eingang des einen Teilgetriebes zu erhöhen und ein Unterstützungsmoment bereitzustellen.

Die oben beschriebenen bevorzugten Varianten des erfindungsgemäßen Verfahrens gehen generell davon aus, dass vor dem Einlegen einer Zielgangstufe in dem einen Teilgetriebe das von der elektrischen Maschine bereitgestellte Antriebsmoment sowie das von der dem einen Teilgetriebe zugeordneten Reibkupplung übertragene Moment deutlich verringert werden, insbesondere auf Null reduziert werden.

In einer bevorzugten Variante, bei der eine in dem anderen Teilgetriebe eingelegte Gangstufe größer ist als eine Quellgangstufe und eine Zielgangstufe in dem einen Teilgetriebe, kann das Einlegen der Zielgangstufe erfolgen, ohne das von der einen Reibkupplung und das von der elektrischen Maschine bereitgestellte Moment auf Null zu reduzieren. Bei diesen Varianten wird davon ausgegangen, dass es zum Einlegen der Zielgangstufe lediglich erforderlich ist, dass an der Zielgangstufe (beispielsweise ein Synchronpaket der Zielgangstufe) ein Zustand der Lastfreiheit eingerichtet wird. Dieses Verfahren stellt also im Wesentlichen darauf ab, dass beim Einlegen der Zielgangstufe an der Zielgangstufe eine Lastfreiheit bzw. im Wesentlichen eine Lastfreiheit vorliegen, so dass eine Drehzahlsynchronisation an der Zielgangstufe über die Synchroneinheit (also beispielsweise eine Synchron-Reibkupplung klassischer Bauweise) erfolgen kann. Dieses Verfahren hat den Vorteil, dass während des gesamten Gangwechsels ein Drehmoment von der elektrischen Maschine über die eine Reibkupplung, über die dem anderen Teilgetriebe zugeordnete Reibkupplung und über das andere Teilgetriebe übertragen und folglich zum Abtrieb geleitet werden kann.

Gemäß einer besonders bevorzugten Variante dieses Verfahrens wird nach dem Auslegen der Quellgangstufe das von der elektrischen Maschine bereitgestellte Antriebsmoment verändert, bis die Drehzahl am Eingang des einen Teilgetriebes an eine Zieldrehzahl für eine Zielgangstufe in dem einen Teilgetriebe angenähert ist.

Es versteht sich, dass hierbei die dem einen Teilgetriebe zugeordnete Reibkupplung weiterhin geschlossen ist, also auch nach dem Auslegen der Quellgangstufe.

Bei Zughochschaltungen kann das von der elektrischen Maschine bereitgestellte Antriebsmoment dabei auf einen Wert unterhalb des von der einen Reibkupplung übertragenen Momentes eingestellt werden. Bei Zugrückschaltungen wird das von der elektrischen Maschine bereitgestellte Antriebsmoment dabei vorzugsweise auf einen Wert oberhalb des von der einen Reibkupplung übertragbaren Momentes eingestellt.

Durch diese Maßnahme kann von der elektrischen Maschine Antriebsmoment über die eine Reibkupplung und über die dem anderen Teilgetriebe zugeordnete Reibkupplung übertragen werden, so dass nur eine geringere Verringerung der Zugkraft für den Fahrer spürbar ist, im Idealfall sogar gar keine Verringerung spürbar ist.

Hierbei ist es besonders bevorzugt, wenn nach dem Drehzahlannäherungsschritt das von der elektrischen Maschine bereitgestellte Antriebsmoment auf einen Wert eingestellt wird, der dem Drehmoment entspricht, das über die dem einen Teilgetriebe zugeordnete Reibkupplung übertragbar ist, um die Drehzahl am Eingang des einen Teilgetriebes im Bereich der Zieldrehzahl zu halten und/oder um die Zielgangstufe im Wesentlichen lastfrei zu stellen, so dass anschließend die Zielgangstufe eingelegt wird.

Hierbei wird das Moment der elektrischen Maschine folglich genutzt, um die Drehzahl an der Zielgangstufe im Wesentlichen zu halten und eine Schaltkupplung der Zielgangstufe im Wesentlichen lastfrei zu stellen, so dass die Zielgangstufe mittels der zugeordneten Synchron-Schaltkupplung einlegbar ist.

Das Antriebsmoment der elektrischen Maschine und das von der einen Reibkupplung übertragbare Moment werden dabei nicht auf Null reduziert sondern im Wesentlichen auf einen Wert eingestellt, der vorzugsweise dem Wert entspricht, auf den die eine Reibkupplung bei Auslegen der Quellgangstufe eingestellt wurde.

Anschließend kann die eine Reibkupplung wieder geöffnet werden, so dass sich die Momentenbilanz von der einen Reibkupplung in Richtung hin zu der Schaltkupplung der Zielgangstufe verschiebt und das Antriebsmoment der elektrischen Maschine wieder über das eine Teilgetriebe in Richtung hin zum Abtrieb geleitet werden kann.

Bei sämtlichen oben beschriebenen Ausführungsformen ist es von Vorteil, wenn nach dem Auslegen der Quellgangstufe eine Zielgangstufe in dem einen Teilgetriebe eingelegt wird und wenn nach dem Einlegen der Zielgangstufe in dem einen Teilgetriebe das von der elektrischen Maschine bereitgestellte Antriebsmoment auf ein Zielmoment eingestellt wird.

Das Zielmoment kann dabei höher oder niedriger sein als das Antriebsmoment, das von der elektrischen Maschine vor Auslegen der Quellgangstufe bereitgestellt worden ist.

Gemäß einer weiteren insgesamt bevorzugten Ausführungsform wird nach dem Auslegen der Quellgangstufe eine Zielgangstufe in dem einen Teilgetriebe eingelegt, wobei nach dem Einlegen der Zielgangstufe in dem einen Teilgetriebe die diesem Teilgetriebe zugeordnete Reibkupplung geöffnet wird.

Bei dieser Ausführungsform wird dann wieder ein Hybridbetrieb nach dem Gangwechsel in dem einen Teilgetriebe eingerichtet, bei dem Antriebsleistung von dem Verbrennungsmotor über das andere Teilgetriebe übertragen wird, und Antriebsleistung von der elektrischen Maschine über das eine Teilgetriebe.

Gemäß einer weiteren bevorzugten Ausführungsform wird die elektrische Maschine und/oder die dem einen Teilgetriebe zugeordnete Reibkupplung nach dem Auslegen der Quellgangstufe dazu angesteuert, eine gewünschte Lastpunktverschiebung für den Verbrennungsmotor hervorzurufen.

In sämtlichen o.g. Ausführungsformen versteht sich, dass die jeweils genannten Drehzahlen und Drehmomente vorzugsweise normiert zu betrachten sind, etwaige Übersetzungen folglich herauszurechnen sind, die beispielsweise durch die Anbindung der elektrischen Maschine an den Eingang des Teilgetriebes, durch Übersetzungen in dem Teilgetriebe selbst und/oder durch Übersetzungen in einem "Final Drive" oder in einem Differenzial in dem Antriebsstrang eingerichtet sind. Ferner versteht sich, dass die verschiedenen vorliegend genannten Momente auf unterschiedliche Bezugsgrößen bezogen sein können. Beispielsweise kann ein Radmoment auf eine Radebene und ein Verbrennungsmotormoment auf eine Kurbelwelle bezogen sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines hybridisierten Doppelkupplungsgetriebe-Antriebsstranges;
- Fig. 2: ein Flussdiagramm einer Ausführungsform eines erfindungsgemäßen Verfahrens;
- Fig. 3: ein Zeitablaufdiagramm von Drehzahlen, Drehmomenten und dem Zustand einer Schaltkupplungsanordnung bei einem Gangwechsel in dem hybridisierten Doppelkupplungsgetriebe-Antriebsstrang der Fig. 1;
- Fig. 4: ein Zeitablaufdiagramm von Drehzahlen, Drehmomenten und dem Zustand einer Schaltkupplungsanordnung bei einem Gangwechsel in dem hybridisierten Doppelkupplungsgetriebe-Antriebsstrang der Fig. 1;
- Fig. 5: ein Zeitablaufdiagramm von Drehzahlen, Drehmomenten und dem Zustand einer Schaltkupplungsanordnung bei einem Gangwechsel in dem hybridisierten Doppelkupplungsgetriebe-Antriebsstrang der Fig. 1;
- Fig. 6: ein Flussdiagramm einer weiteren Ausführungsform eines erfindungsgemäßen Verfahrens;
- Fig. 7: ein Zeitablaufdiagramm von Drehzahlen, Drehmomenten und dem Zustand einer Schaltkupplungsanordnung bei einem Gangwechsel in dem hybridisierten Doppelkupplungsgetriebe-Antriebsstrang der Fig. 1 in Anwendung des Flussdiagrammes der Fig. 6 bei einer Zug-Hoch-Schaltung; und
- Fig. 8: ein Zeitablaufdiagramm von Drehzahlen, Drehmomenten und dem Zustand einer Schaltkupplungsanordnung bei einem Gangwechsel in dem hybridisierten Doppelkupplungsgetriebe-Antriebsstrang der Fig. 1 in Anwendung des Flussdiagrammes der Fig. 6 bei einer Zug-Rück-Schaltung.

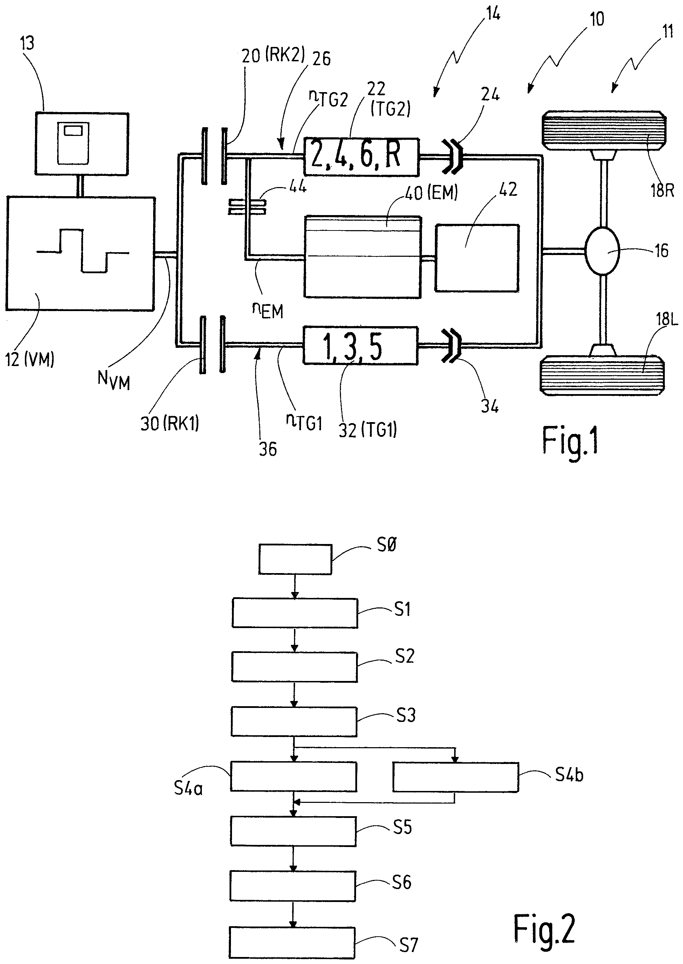

In Fig. 1 ist ein Antriebsstrang für ein Kraftfahrzeug 11 generell mit 10 bezeichnet. Das Kraftfahrzeug 11 kann beispielsweise ein Personenkraftwagen sein.

Der Antriebsstrang 10 beinhaltet einen Verbrennungsmotor 12 (VM), der aus einem Energiespeicher wie einem Kraftstofftank 13 versorgt wird. Ferner beinhaltet der Antriebsstrang 10 ein Doppelkupplungsgetriebe (DKG), dessen Abtriebsseite mit einem Differenzial 16 verbunden ist. Das Differenzial 16 verteilt Antriebsleistung auf ein linkes und ein rechtes angetriebenes Rad 18L, 18R.

Das Doppelkupplungsgetriebe 14 beinhaltet eine Doppelkupplungsanordnung mit einer ersten Reibkupplung 30 und einer zweiten Reibkupplung 20 (RK1 bzw. RK2). Ferner weist das Doppelkupplungsgetriebe ein erstes Teilgetriebe 32 (TG1) und ein zweites Teilgetriebe 22 (TG2) auf. Das erste Teilgetriebe 32 beinhaltet beispielsweise die ungeraden Vorwärtsgangstufen 1, 3, 5 (ggf. 7), die mittels schematisch angedeuteter Schaltkupplungen 34 ein- und auslegbar sind. Die erste Reibkupplung 30 und das erste Teilgetriebe 32 bilden einen ersten Leistungsübertragungspfad 36 zur Übertragung von Leistung von dem Verbrennungsmotor 12 zu dem Differenzial 16.

Das Doppelkupplungsgetriebe 14 beinhaltet ferner ein zweites Teilgetriebe 22, das beispielsweise die geraden Gangstufen 2, 4, 6 (ggf. 8) und ggf. die Rückwärtsgangstufe R aufweist, wobei diese Gangstufen mittels zugeordneter Schaltkupplungen 24 ein- und auslegbar sind. Die zweite Reibkupplung 20 und das zweite Teilgetriebe 22 bilden einen zweiten Leistungsübertragungspfad 26 zur Übertragung von Antriebsleistung von dem Verbrennungsmotor 12 zu dem Differenzial 16.

Ferner beinhaltet der Antriebsstrang 10 eine elektrische Maschine 40 (EM), die mit einer Anordnung 42 zur Ansteuerung und Energieversorgung verbunden ist. Die Anordnung 42 kann beispielsweise eine Leistungselektronik sowie eine Batterie beinhalten.

Die elektrische Maschine 40 ist fest an einen Eingang des zweiten Teilgetriebes 22 angebunden, beispielsweise mittels eines Stirnradsatzes (beispielsweise eines Gangradsatzes des zweiten Teilgetriebes 22) oder dergleichen. Alternativ hierzu kann die elektrische Maschine 40 mittels einer Koppelanordnung 44 (beispielsweise in Form einer Schaltkupplung) an den Eingang des zweiten Teilgetriebes 22 angebunden sein.

Die Anbindung der elektrischen Maschine 40 an jenes Teilgetriebe, das die höchste oder zweithöchste Gangstufe sowie die Rückwärtsgangstufe aufweist, ermöglicht ein elektrisches Fahren in nahezu allen Betriebssituationen.

Der Antriebsstrang 10 ist dazu ausgelegt, in drei unterschiedlichen Betriebsarten zu arbeiten. In einem konventionellen Antriebsmodus wird Antriebsleistung nur von dem Verbrennungsmotor 12 erzeugt. Gangwechsel erfolgen auf Zugkraftunterbrechungsfreier Art und Weise, indem Antriebsleistung über einen der Leistungsübertragungspfade 26, 36 geführt wird, wobei in dem Teilgetriebe des anderen Leistungsübertragungspfades eine Gangstufe vorgewählt wird. Anschließend erfolgt ein Gangwechsel durch Übergabe des Leistungsübertragungsflusses von dem einen Pfad auf den anderen Pfad, indem die Reibkupplungen 20, 30 auf überschneidende Art und Weise betätigt werden. Dieser Antriebsmodus ist auf dem Gebiet der Doppelkupplungsgetriebe allgemein bekannt.

Ferner ist ein zweiter hybridischer Antriebsmodus einrichtbar, bei dem Antriebsleistung sowohl von dem Antriebsmotor 12 als auch von der elektrischen Maschine 40 bereitgestellt wird. Hierbei können die Antriebsleistungen im Wesentlichen über den Summenpunkt am Eingang des zweiten Teilgetriebes 22 oder an den Ausgängen der Teilgetriebe 22, 32 addiert werden.

Schließlich ist ein dritter Antriebsmodus möglich, bei dem nur die elektrische Maschine 40 zur Erzeugung von Antriebsleistung angesteuert wird, wohingegen der Antriebsmotor 12 stillgelegt (ausgeschaltet) wird. Da die elektrische Maschine 40 auf der Sekundärseite der zweiten Reibkupplung 20 angebunden ist, können in diesem Betriebsmodus die herkömmlichen Schaltabläufe eines Doppelkupplungsgetriebes nicht angewendet werden.

Alternativ zur Anbindung an das zweite Teilgetriebe 22, das die geraden Vorwärtsgangstufen aufweist, ist es auch möglich, die elektrische Maschine 40 an den Eingang des ersten Teilgetriebes 32 anzubinden.

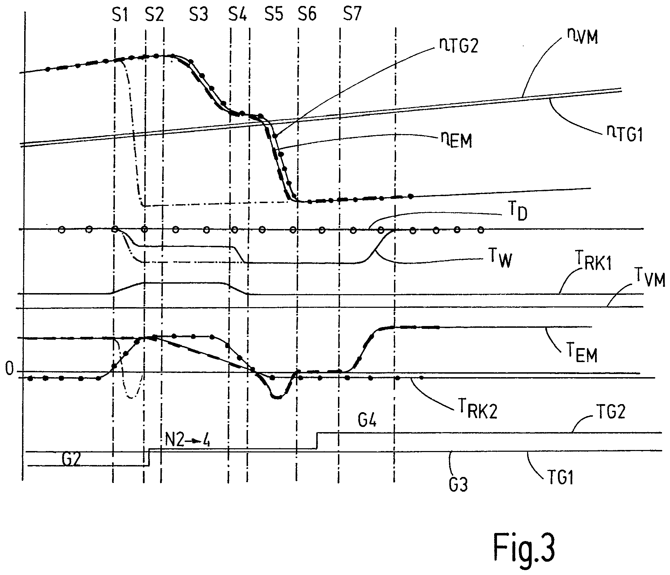

In den Fig. 2 und 3 ist ein Verfahren zum Betreiben eines solchen hybridisierten Doppelkupplungsgetriebe-Antriebsstranges 10 dargestellt, wobei in einem hybridischen Betrieb (zweiter Antriebsmodus) zunächst eine Quellgangstufe in dem zweiten Teilgetriebe 22 ausgelegt wird und wobei anschließend entweder in dem gleichen Teilgetriebe eine Zielgangstufe eingelegt wird oder eine Lastpunktverschiebung für den Verbrennungsmotor erfolgt.

Fig. 2 zeigt dabei ein Flussdiagramm eines solchen Verfahrens und Fig. 3 zeigt ein Zeitablaufdiagramm. Die einzelnen Schritte S1 bis S7 des Flussdiagrammes sind in Fig. 3 in zeitlicher Zuordnung eingezeichnet. Fig. 3 zeigt dabei den zeitlichen Verlauf folgender Drehzahlen:
- n_{VM}: Drehzahl des Verbrennungsmotors 12
- n_{EM}: Drehzahl der elektrischen Maschine 40
- n_{TG1}: Drehzahl am Eingang des ersten Teilgetriebes 32
- n_{TG2}: Drehzahl am Eingang des zweiten Teilgetriebes 22.

Ferner zeigt Fig. 3 den zeitlichen Verlauf verschiedener Drehmomente, wie folgt:
- T_{D}: von einem Fahrer angefordertes Wunschmoment
- T_{W}: vom Antriebsstrang tatsächlich an den Antriebsrädern bereitgestelltes Radmoment
- T_{VM}: vom Verbrennungsmotor 12 bereitgestelltes Drehmoment
- T_{EM}: von der elektrischen Maschine 40 bereitgestelltes Drehmoment
- T_{RK1}: von der ersten Reibkupplung 30 übertragbares Drehmoment
- T_{RK2}: von der zweiten Reibkupplung 20 übertragbares Drehmoment.

Ferner zeigt Fig. 3 den zeitlichen Verlauf des Zustandes einer Schaltkupplungsanordnung in dem zweiten Teilgetriebe 22, bei dem zunächst eine Gangstufe 2 in dem zweiten Teilgetriebe angelegt ist, anschließend eine Neutralstellung in dem zweiten Teilgetriebe eingerichtet ist (N2 → 4), und schließlich eine Gangstufe 4 des zweiten Teilgetriebes 22 eingelegt ist.

Das Verfahren geht aus von einem Zustand, bei dem das Kraftfahrzeug im hybridischen Betrieb fährt. Dabei wird Antriebsleistung von dem Verbrennungsmotor 12 über die geschlossene erste Reibkupplung 30 und das erste Teilgetriebe 32 übertragen, wobei in dem ersten Teilgetriebe 32 die Gangstufe 3 eingelegt ist. Ferner wird Antriebsleistung mittels der elektrischen Maschine 40 über das zweite Teilgetriebe 22 übertragen, in dem die Gangstufe 2 eingelegt ist. Die zweite Reibkupplung 20 ist hierbei geöffnet. Demzufolge ist die Drehzahl n_{TG2} bei Verfahrensbeginn größer als n_{TG1}. Die Drehzahl n_{TG2} ist während des Verfahrens identisch oder nahezu identisch der Drehzahl n_{EM} der elektrischen Maschine (wobei eine etwaige Übersetzung der Verbindung zwischen Maschine 40 und zweitem Teilgetriebe 22 herausgerechnet ist).

Das Wunschmoment T_{D} des Fahrers ist so groß, dass die elektrische Maschine T_{EM} bei Beginn des Verfahrens ein Drehmoment größer Null bereitstellt. Während des Verfahrens bleibt der einfacheren Betrachtungsweise halber das Drehmoment T_{VM} des Verbrennungsmotors konstant, und das Drehmoment T_{RK1} ist auf einen Wert eingestellt, der mindestens größer gleich T_{VM} istt, so dass die erste Reibkupplung 30 kraftschlüssig geschlossen ist.

Zum Zeitpunkt S0 erfolgt eine Anforderung an eine nicht näher bezeichnete Getriebesteuerung, wonach in dem "passiven" zweiten Teilgetriebe 22 ein Gangwechsel von der Gangstufe 2 in die Gangstufe 4 erfolgen soll. Hierauf wird das erfindungsgemäße Verfahren eingeleitet, und zwar mit dem Schritt S1, in dem das Moment T_{RK2} der zweiten Reibkupplung 20 erhöht wird, und zwar auf einen Wert im Wesentlichen gleich dem von der elektrischen Maschine 40 bereitgestellten Drehmoment T_{EM}. Dies ist am Ende von Phase S1 erreicht, so dass in der Phase S2 die Quellgangstufe (Gangstufe 2, bzw. G2) ausgelegt werden kann.

Das Auslegen der Quellgangstufe ist folglich möglich, ohne dass das Drehmoment T_{EM} der elektrischen Maschine schlagartig verringert ist, wie es in der Phase S1 in Fig. 3 gestrichelt dargestellt ist, wobei die gestrichelte Darstellung ein Verfahren gemäß dem Stand der Technik zeigt. Vielmehr bleibt das Moment T_{EM} der elektrischen Maschine bis zum Auslegen der Quellgangstufe im Wesentlichen konstant.

Dies hat zur Folge, dass das an der Antriebsachse zur Verfügung stehende Moment T_{W} zwar in der Phase S1 abfällt, jedoch nicht so stark wie im Stand der Technik. Der Grund hierfür liegt darin, dass ein Teil des von der elektrischen Maschine bereitgestellten Momentes T_{EM} über die zweite Reibkupplung 20 und über die erste Reibkupplung 30 am Eingang des ersten Teilgetriebes 32 zur Verfügung gestellt werden kann, um auf diese Weise das von dem Verbrennungsmotor bereitgestellte Drehmoment T_{VM} nach wie vor etwas zu erhöhen.

Im anschließenden Schritt S3 wird dann das Einlegen der Zielgangstufe vorbereitet. Hierzu wird zunächst das Moment T_{EM} allmählich reduziert, und zwar bis die Drehzahl n_{TG2} nahe der Drehzahl n_{TG1} ist. Dies ist am Ende von Phase S3 erreicht. Die zweite Reibkupplung 20 bleibt in dieser Phase S3 in einem Zustand, bei dem das ehemals von der elektrischen Maschine bereitgestellte Moment zumindest teilweise übertragbar ist, so dass nach wie vor eine Zugkraftunterstützung erfolgen kann.

Im anschließenden Schritt S4 wird zum einen die zweite Reibkupplung 20 geöffnet (Schritt S4a), wobei das Moment T_{RK2} wieder verringert wird, vorzugsweise auf den Ausgangswert vor S0. Zum anderen wird das von der elektrischen Maschine bereitgestellte Drehmoment parallel oder zumindest abschnittsweise gleichzeitig hiermit reduziert, bis das von der elektrischen Maschine 40 bereitgestellte Drehmoment T_{EM} im Wesentlichen gleich 0 ist (am Ende von Phase S4, gemäß Schritt S4b).

Durch diese Maßnahme wird das zweite Teilgetriebe 22 lastfrei gestellt. Im folgenden Schritt S5 wird dann die Drehzahl n_{EM} der elektrischen Maschine so verändert, so dass auf die Drehzahl der Zielgangstufe synchronisiert wird, nämlich die Gangstufe G4. Dieser Synchronisierungsprozess ist am Ende von Schritt S5 erreicht, so dass im Schritt S6 die Zielgangstufe G4 im zweiten Teilgetriebe 22 eingelegt werden kann.

In einem weiteren Schritt S7 wird dann das von der elektrischen Maschine 40 bereitgestellte Drehmoment T_{EM} wieder erhöht, und zwar auf ein Zielmoment, derart, dass das an den Rädern des Kraftfahrzeuges bereitgestellte Moment T_{W} wieder dem Wunschmoment T_{D} des Fahrers entspricht (am Ende von S7).

In den Phasen S1 bis S4 kann das Moment T_{RK1} der ersten Reibkupplung 30 etwas erhöht werden, und zwar vorzugsweise analog bzw. zeitlich parallel zu dem Erhöhen des Momentes T_{RK2} der zweiten Reibkupplung 20, so dass während der Phase S3 das Moment T_{EM} der elektrischen Maschine zusätzlich zu dem Moment T_{VM} des Verbrennungsmotors in Richtung Abtrieb übertragen wird.

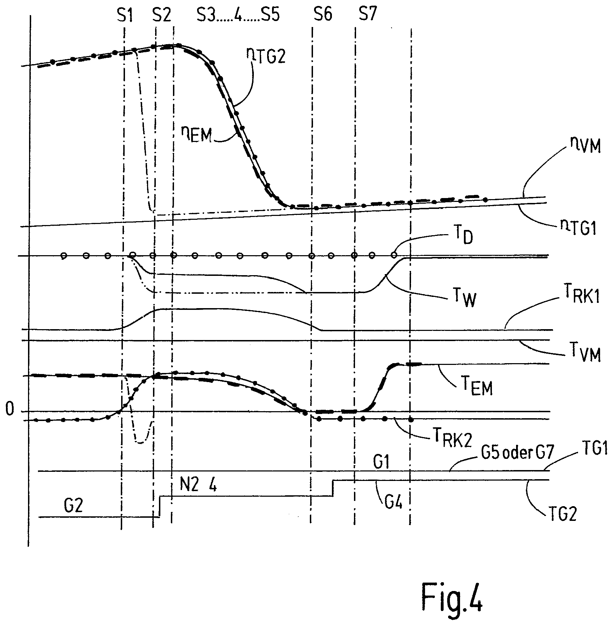

In Fig. 4 ist ein der Fig. 3 entsprechendes Zeitablaufdiagramm gezeigt, das hinsichtlich des Ablaufes generell dem Verfahren der Fig. 3 entspricht. Vorliegend geht das Verfahren jedoch davon aus, dass in dem ersten Teilgetriebe 32 eine höhere Gangstufe als die Zielgangstufe G4 eingelegt ist, also beispielsweise die Gangstufe G5 oder die Gangstufe G7.

In dieser Variante kann das Moment T_{EM} der elektrischen Maschine bis zur Zieldrehzahl n_{TG2} über die Reibkupplung 20 an den Abtrieb geleitet werden. Hierdurch verlängert sich der Zeitanteil, während dessen das Moment T_{EM} zum Vortrieb verfügbar ist. Hierbei lassen sich die Schritte bzw. Phasen S3 bis S5 in einem Schritt zusammenfassen und somit auch zeitlich optimieren. Erst bei einer Zieldrehzahl von n_{TG2} am Ende dieser kombinierten Phase werden das Moment T_{EM} der elektrischen Maschine und das Moment T_{RK2} auf Null reduziert, um den Zielgang einzulegen.

Die obigen Diagramme betreffen Zug-Hoch-Schaltungen, bei denen die Quellgangstufe (z.B. G2) in dem einen Teilgetriebe 22 kleiner ist als die Gangstufe (hier beispielsweise G3 oder G5 oder G7), die in dem anderen Teilgetriebe 32 eingelegt ist, so dass am Anfang des Verfahrens n_{TG2} größer ist als n_{TG1}.

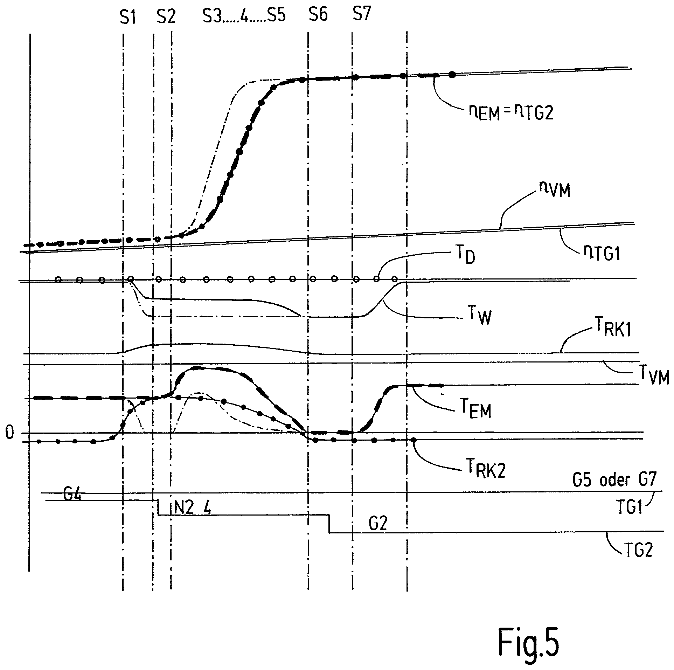

In Fig. 5 ist ein den Fig. 2 und 3 entsprechendes Zeitablaufdiagramm gezeigt, bei denen das erfindungsgemäße Verfahren bei einer Zug-Rück-Schaltung angewendet wird (z.B. 6-4 oder 4-2). Hier gilt ebenfalls, dass der Zug möglichst lange erhalten wird. Dies ist generell dann möglich, wenn eine Drehzahl n_{TG2} des einen Teilgetriebes am Anfang des Verfahrens über der Drehzahl n_{TG1} des anderen Teilgetriebes 32 liegt. Bei Zugrückschaltungen von 6 nach 4 oder von 6 nach 7 ist folglich in dem anderen Teilgetriebe die Gangstufe 7 einzulegen. Bei Zug-Rück-Schaltungen von 4 nach 2 können in dem anderen Teilgetriebe 32 die Gangstufe 5 oder die Gangstufe 7 eingelegt sein.

Demzufolge ist die Drehzahl n_{TG1} des anderen Teilgetriebes 32 generell auch kleiner als die Zieldrehzahl n_{EM} der elektrischen Maschine. Hierdurch ergibt sich die Möglichkeit, die Zugkraft der elektrischen Maschine noch länger aufrecht zu erhalten.

Das Verfahren gemäß Fig. 5 geht von einem Zustand aus, bei dem in dem einen Teilgetriebe die Gangstufe 4 eingelegt ist und eine Zug-Rückschaltung in die Gangstufe G2 durchgeführt werden muss. In dem anderen Teilgetriebe ist die Gangstufe G5 oder G7 eingelegt. Bei Einleitung des Verfahrens (Schritt S1) wird, wie auch bei den anderen Verfahren das Moment T_{RK2} des einen Teilgetriebes erhöht, bis das von der elektrischen Maschine bereitgestellte Moment T_{EM} erreicht wird (bei Schritt S2). Wie auch bei den anderen, oben beschriebenen Verfahren kann dies mit einer parallelen bzw. analogen Erhöhung des Momentes T_{RK1} des anderen Teilgetriebes einhergehen, um das Moment T_{Rk1} an das von dem Verbrennungsmotor und der elektrischen Maschine bereitgestellte Moment anzupassen. Im Schritt S2 kann aufgrund der Lastfreiheit die Quellgangstufe G4 ausgelegt werden und die Neutralstellung N2-4 in dem einen Teilgetriebe TG2 eingelegt werden. In der darauffolgenden Phase S3 wird das Moment T_{RK2} des einen Teilgetriebes TG2 allmählich verringert. Ferner wird das Moment T_{EM} der elektrischen Maschine in der Phase S3 erhöht (vom Betrag her vorzugsweise größer als das Moment T_{RK2}), bis die Drehzahl n_{TG2} nahe der Zieldrehzahl ist. Anschließend kann das Moment T_{EM} wieder bis auf 0 reduziert werden, was zum Beginn der Phase S6 erreicht ist. Auch das Moment T_{RK2} wird vorzugsweise bis auf 0 reduziert.

In der Phase S6 kann die Drehzahl n_{EM} der elektrischen Maschine, sofern nötig, auf die Zieldrehzahl der Zielgangstufe G2 synchronisiert werden, so dass im Schritt S6 die Zielgangstufe G2 eingelegt werden kann.

Anschließend kann das Moment T_{EM} der elektrischen Maschine wieder erhöht werden, um dem Fahrerwunsch T_{D} zu entsprechen.

Wie bei dem Verfahren der Fig. 4 kann sich der Zeitanteil reduzieren, während dessen das Moment T_{EM} der elektrischen Maschine als Radmoment T_{W} zur Verfügung steht. Allerdings ist es bevorzugt, wenn das Moment T_{EM} auch erhöht wird, um sowohl den Vortrieb (über Reibkupplung 20, Reibkupplung 30 und das Teilgetriebe 32) zu gewährleisten, als auch die für die Rückschaltung erforderliche Drehzahlerhöhung zu ermöglichen.

Bei diesem Verfahren ist die Drehzahl n_{TG1} generell auch kleiner als die Zieldrehzahl n_{EM} der elektrischen Maschine.

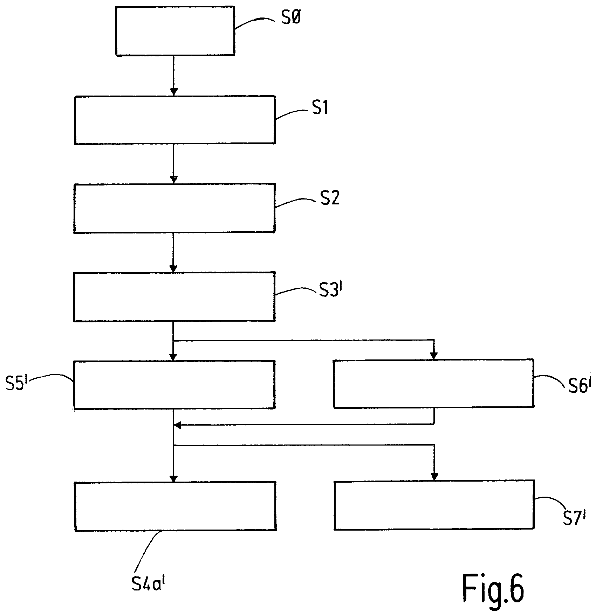

In Fig. 6 ist ein Flussdiagramm einer weiteren Ausführungsform eines erfindungsgemäßen Verfahrens gezeigt, das hinsichtlich des Ablaufes generell dem Verfahren der Fig. 2 entspricht. Gleiche bzw. einander entsprechende Schritte sind daher durch entsprechende Bezugszeichen gekennzeichnet.

Das Verfahren der Fig. 6 wird ebenfalls mit einem Antriebsstrang durchgeführt, wie er in Fig. 1 dargestellt ist. Im Unterschied zu den oben beschriebenen Verfahren der Fig. 3 bis 5 wird dabei vor dem Einlegen der Zielgangstufe bei einem Gangwechsel das Moment der elektrischen Maschine und/oder das Moment der zweiten Reibkupplung nicht auf Null reduziert.

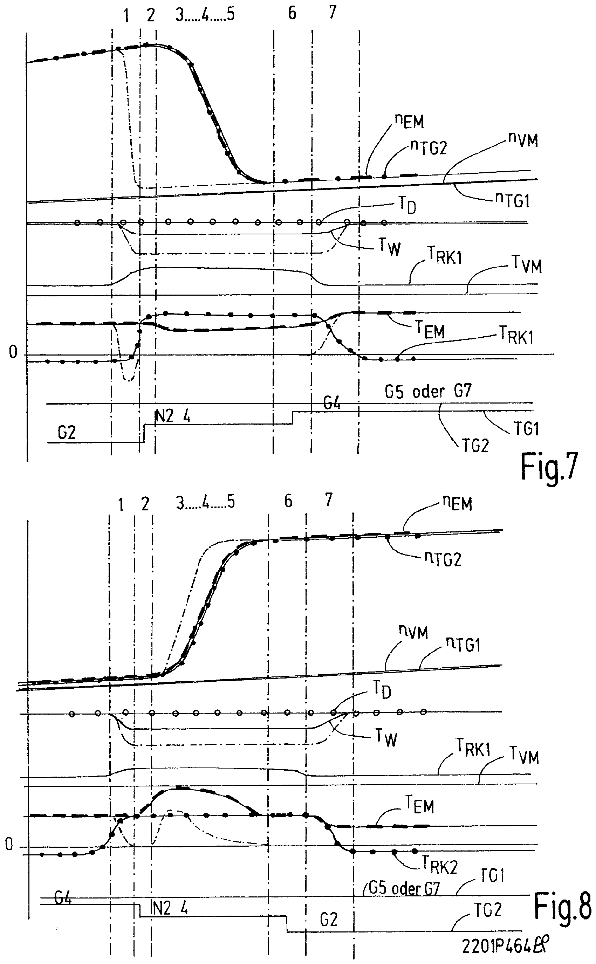

Fig. 7 zeigt das Verfahren der Fig. 6 für den Fall einer Zug-Hoch-Schaltung. Fig. 8 zeigt das Verfahren der Fig. 6 bei einer Zug-Rück-Schaltung. In beiden Fällen ist eine in dem anderen Teilgetriebe (ersten Teilgetriebe 32) eingelegte Gangstufe höher als sowohl eine Quellgangstufe als auch eine Zielgangstufe in dem einen (zweiten) Teilgetriebe 22 während des Gangwechsels. Demzufolge kann bei einer Zug-Hoch-Schaltung gemäß Fig. 7 von Gangstufe 2 zu Gangstufe 4 im zweiten Teilgetriebe 22 in dem ersten Teilgetriebe 32 die Gangstufe G5 oder G7 eingelegt sein. In dem ersten Teilgetriebe 32 ist die Gangstufe G5 oder G7 auch bei einer Zug-Rück-Schaltung von Gangstufe G4 in Gangstufe G2 eingelegt, wie es in Fig. 8 gezeigt ist.

Die Verfahren der Fig. 7 und 8 sind, was die Schritte bis einschließlich dem Auslegen der Quellgangstufe betrifft, identisch zu den oben beschriebenen Verfahren. So wird nach einem Schaltbefehl für das zweite Teilgetriebe 22 (Schritt S0) in einem Schritt S1 zunächst das von der zweiten Reibkupplung 20 übertragbare Moment erhöht, und zwar auf ein Moment, das dem von der elektrischen Maschine bereitgestellten Antriebsmoment T_{EM} entspricht. Anschließend wird die Quellgangstufe (G2 in Fig. 7, G4 in Fig. 8) ausgelegt.

In einem Schritt S3' wird das von der elektrischen Maschine bereitgestellte Antriebsmoment TEM anschließend verändert, bis die Drehzahl n_{TG2} am Eingang des zweiten Teilgetriebes 22 nahe einer Drehzahl ist, die zum Einlegen der Zielgangstufe (G4 in Fig. 7, G2 in Fig. 8) geeignet ist. Im Falle der Fig. 7 wird das Antriebsmoment TE_{M} dabei etwas reduziert. Im Falle der Fig. 8 wird das Antriebsmoment T_{EM} dabei erhöht.

In einem anschließenden Schritt S5' wird das Antriebsmoment T_{EM} an das von der zweiten Reibkupplung 20 übertragbare Moment angepasst, wodurch die Drehzahl an der Zielgangstufe (G4 bzw. G2) im Wesentlichen gehalten wird und wobei das von der elektrischen Maschine bereitgestellte Antriebsmoment T_{EM} im Wesentlichen vollständig über die zweite Reibkupplung 20 übertragen wird, so dass eine Synchron-Schaltkupplung der Zielgangstufe im Wesentlichen lastfrei gestellt wird. Hierdurch kann in einem parallel durchzuführenden Schritt S6' die Zielgangstufe G4 bzw. G2 eingelegt werden.

Anschließend können in einem Schritt S4a' und in einem Schritt S7' die zweite Reibkupplung 20 geöffnet und das Antriebsmoment T_{EM} der elektrischen Maschine auf ein Zielmoment angepasst werden.

In allen oben beschriebenen Varianten versteht sich, dass parallel zu dem Verändern des über die zweite Reibkupplung übertragbaren Momentes T_{RK2} auch das über die erste Reibkupplung 30 übertragbare Moment T_{RK1} angepasst wird (insbesondere erhöht wird), um das von der elektrischen Maschine bereitgestellte Moment über die erste Reibkupplung 30 übertragen zu können.

In einer weiteren alternativen Ausführungsform des erfindungsgemäßen Verfahrens wird nach dem Auslegen der Quellgangstufe, d.h. nach dem Schritt S2 die elektrische Maschine 40 und/oder die zweite Reibkupplung so angesteuert, dass eine Lastpunktverschiebung für den Verbrennungsmotor 12 erfolgt.

## Patentansprüche

1. Verfahren zum Betreiben eines hybridisierten Doppelkupplungsgetriebe-Antriebsstranges (10), der einen Verbrennungsmotor (12), eine Doppelkupplungsanordnung mit einer ersten und einer zweiten Reibkupplung (30, 20), ein erstes Teilgetriebe (32), das eine Mehrzahl von Gangstufen beinhaltet, ein zweites Teilgetriebe (22), das eine Mehrzahl von Gangstufen beinhaltet, sowie eine elektrische Maschine (40) aufweist, die an den Eingang von einem der Teilgetriebe angebunden oder damit verbindbar ist, wobei in einem hybridischen Betrieb, bei dem
- Antriebsleistung von der elektrischen Maschine (40) über das eine Teilgetriebe (22) übertragen wird,
- Antriebsleistung von dem Verbrennungsmotor (12) über das andere Teilgetriebe (32) übertragen wird, wobei die dem anderen Teilgetriebe (32) zugeordnete Reibkupplung (32) geschlossen ist, und
- die dem einen Teilgetriebe (22) zugeordnete Reibkupplung (20) geöffnet ist,
eine Quellgangstufe (G2; G4) in dem einen Teilgetriebe (22) ausgelegt wird, mit den Schritten:
- Schließen (S1) der dem einen Teilgetriebe (22) zugeordneten Reibkupplung (20), so dass diese Reibkupplung (20) ein Drehmoment (T_{RK2}) übertragen kann, das dem von der elektrischen Maschine (40) bereitgestellten Antriebsmoment (T_{EM}) entspricht, und anschließend
- Auslegen (S2) der Quellgangstufe (G2; G4) in dem einen Teilgetriebe (22).

2. Verfahren nach Anspruch 1, wobei nach dem Auslegen (S2) der Quellgangstufe (G2; G4) das von der elektrischen Maschine (40) bereitgestellte Antriebsmoment (T_{EM}) verändert wird (S3), bis die Drehzahl (n_{TG2}) am Eingang des einen Teilgetriebes (22) an die Drehzahl (n_{TG1}) am Eingang des anderen Teilgetriebes (32) angepasst ist.

3. Verfahren nach Anspruch 1 oder 2, wobei nach dem Auslegen (S2) der Quellgangstufe (G2; G4) die dem einen Teilgetriebe (22) zugeordnete Reibkupplung (20) weiter geschlossen wird oder bleibt, bis die Drehzahl (n_{TG2}) am Eingang des einen Teilgetriebes (22) an die Drehzahl (n_{TG1}) am Eingang des anderen Teilgetriebes (32) angepasst ist.

4. Verfahren nach Anspruch 2 oder 3, wobei am Ende oder nach der Erreichung der Drehzahlanpassung die dem einen Teilgetriebe (22) zugeordnete Reibkupplung (20) geöffnet wird (S4a) und das von der elektrischen Maschine (40) bereitgestellte Antriebsmoment (T_{EM}) reduziert wird (S4b), so dass das Einlegen einer Zielgangstufe (G4; G2) in dem einen Teilgetriebe (22) möglich wird.

5. Verfahren nach Anspruch 4, wobei mit dem oder nach dem Reduzieren (S4b) des von der elektrischen Maschine (40) bereitgestellten Antriebsmomentes (T_{EM}) die Drehzahl der elektrischen Maschine (40) auf eine der Synchrondrehzahl für die Zielgangstufe entsprechende Drehzahl reduziert wird (S5) und anschließend die Zielgangstufe (G4; G2) in dem einen Teilgetriebe (22) eingelegt wird (S6).

6. Verfahren nach Anspruch 1 oder 2, wobei nach dem Auslegen (S2) der Quellgangstufe (2) das von der elektrischen Maschine (40) bereitgestellte Antriebsmoment erhöht wird (S3), um die Drehzahl (n_{TG2}) am Eingang des einen Teilgetriebes (22) zu erhöhen und ein Unterstützungsmoment bereitzustellen.

7. Verfahren nach Anspruch 1, wobei nach dem Auslegen (S2) der Quellgangstufe (G2; G4) das von der elektrischen Maschine (40) bereitgestellte Antriebsmoment (T_{EM}) verändert wird (S3'), bis die die Drehzahl (n_{TG2}) am Eingang des einen Teilgetriebes (22) an eine Zieldrehzahl für eine Zielgangstufe (G4; G2) in dem einen Teilgetriebe (22) angenähert ist.

8. Verfahren nach Anspruch 7, wobei nach dem Drehzahlannäherungsschritt das von der elektrischen Maschine (40) bereitgestellte Antriebsmoment (T_{EM}) auf einen Wert eingestellt wird (S5'), der dem Drehmoment (T_{RK2}) entspricht, das über die dem einen Teilgetriebe (22) zugeordnete Reibkupplung (20) übertragbar ist, um die Drehzahl (n_{TG2}) am Eingang des einen Teilgetriebes (22) im Bereich der Zieldrehzahl zu halten und die Zielgangstufe (G4; G2) einlegen zu können.

9. Verfahren nach einem der Ansprüche 1 - 8, wobei nach dem Auslegen der Quellgangstufe (G2; G4) eine Zielgangstufe (G4; G2) in dem einen Teilgetriebe (22) eingelegt wird, und wobei nach dem Einlegen (S6) der Zielgangstufe (G4; G2) in dem einen Teilgetriebe (22) das von der elektrischen Maschine (40) bereitgestellte Antriebsmoment (T_{EM}) auf ein Zielmoment eingestellt wird.

10. Verfahren nach einem der Ansprüche 1 - 9, wobei nach dem Auslegen der Quellgangstufe (G2; G4) eine Zielgangstufe (G4; G2) in dem einen Teilgetriebe (22) eingelegt wird, und wobei nach dem Einlegen (S6) der Zielgangstufe (G4; G2) in dem einen Teilgetriebe (22) die diesem Teilgetriebe (22) zugeordnete Reibkupplung (22) geöffnet wird.

11. Verfahren nach einem der Ansprüche 1 - 10, wobei nach dem Auslegen der Quellgangstufe (G2; G4) eine Zielgangstufe (G4; G2) in dem einen Teilgetriebe (22) eingelegt wird, und wobei während des Gangwechsels in dem einen Teilgetriebe (22) Antriebsleistung von dem Verbrennungsmotor (12) über das andere Teilgetriebe (32) übertragen wird.

12. Verfahren nach Anspruch 1, wobei die elektrische Maschine (40) und/oder die dem einen Teilgetriebe (22) zugeordnete Reibkupplung (20) nach dem Auslegen der Quellgangstufe (3) dazu angesteuert wird, eine gewünschte Lastpunktverschiebung für den Verbrennungsmotor (12) hervorzurufen.

## Claims

1. Method for operating a hybrid double clutch transmission drive train (10), which comprises an internal combustion engine (12), a double clutch arrangement having a first and second friction clutch (30, 20), a first transmission unit (32) which comprises a plurality of gear stages, a second transmission unit (22) which comprises a plurality of gear stages, and an electric machine (40), which is coupled to the input of one of the transmission units or which can be connected thereto, wherein hybrid operation, in which
- drive power from the electric machine (40) is transmitted via the one transmission unit (22),
- drive power from the internal combustion engine (12) is transmitted via the other transmission unit (32), wherein the friction clutch (32) assigned to the other transmission unit (32) is closed, and
- the friction clutch (20) assigned to the one transmission unit (22) is opened,
involves the disengagement of an original gear (G2; G4) in the one transmission unit (22), said method comprising the following steps:
- closing (S1) of the friction clutch (20) assigned to the one transmission unit (22), so that this friction clutch (20) can transmit a torque (T_{RK2}) which corresponds to the drive torque (T_{EM}) supplied by the electric machine (40), and then
- disengagement (S2) of the original gear (G2; G4) in the one transmission unit (22).

2. Method according to Claim 1, wherein after disengagement (S2) of the original gear (G2; G4), the drive torque (T_{EM}) supplied by the electric machine (40) is adjusted (S3) until the speed (n_{TG2}) on the input of the one transmission unit (22) is matched to the speed (n_{TG1}) on the input of the other transmission unit (32).

3. Method according to Claim 1 or 2, wherein after disengagement (S2) of the original gear (G2; G4), the friction clutch (20) assigned to the one transmission unit (22) is closed further or remains closed, until the speed (n_{TG2}) on the input of the one transmission unit (22) is matched to the speed (n_{TG1}) on the input of the other transmission unit (32).

4. Method according to Claim 2 or 3, wherein on completion of or after achieving the speed adjustment, the friction clutch (20) assigned to the one transmission unit (22) is opened (S4a) and the drive torque (T_{EM}) supplied by the electric machine (40) is reduced (S4b), so as to allow the engagement of a target gear (G4; G2) in the one transmission unit (22).

5. Method according to Claim 4, wherein whilst or after reducing (S4b) the drive torque (T_{EM}) supplied by the electric machine (40), the speed of the electric machine (40) is reduced (S5) to a speed corresponding to the synchronization speed for the target gear and the target gear (G4; G2) is then engaged (S6) in the one transmission unit (22).

6. Method according to Claim 1 or 2, wherein after disengagement (S2) of the original gear (2), the drive torque supplied by the electric machine (40) is increased (S3), in order to increase the speed (n_{TG2}) on the input of the one transmission unit (22) and to supply a boost torque.

7. Method according to Claim 1, wherein after disengagement (S2) of the original gear (G2; G4), the drive torque (T_{EM}) supplied by the electric machine (40) is adjusted (S3') until the speed (n_{TG2}) on the input of the one transmission unit (22) is made to approximate to a target speed for a target gear (G4; G2) in the one transmission unit (22).

8. Method according to Claim 7, wherein after the speed approximation step the drive torque (T_{EM}) supplied by the electric machine (40) is set (S5') to a value which corresponds to the torque (T_{RK2}) that can be transmitted via the friction clutch (20) assigned to the one transmission unit (22), in order to keep the speed (N_{TG2}) on the input of the one transmission unit (22) in the target speed range and in order to be able to engage the target gear (G4; G2).

9. Method according to one of Claims 1 - 8, wherein after disengagement of the original gear (G2; G4), a target gear (G4; G2) is engaged in the one transmission unit (22), and wherein after engagement (S6) of the target gear (G4; G2) in the one transmission unit (22) the drive torque (T_{EM}) supplied by the electric machine (40) is set to a target torque.

10. Method according to one of Claims 1 - 9, wherein after disengagement of the original gear (G2; G4), a target gear (G4; G2) is engaged in the one transmission unit (22), and wherein after engagement (S6) of the target gear (G4; G2) in the one transmission unit (22) the friction clutch (22) assigned to this transmission unit (22) is opened.

11. Method according to one of Claims 1 - 10, wherein after disengagement of the original gear (G2; G4), a target gear (G4; G2) is engaged in the one transmission unit (22), and wherein during the gear change in the one transmission unit (22) drive power from the internal combustion engine (12) is transmitted via the other transmission unit (32).

12. Method according to Claim 1, wherein after disengagement of the original gear (3), the electric machine (40) and/or the friction clutch (20) assigned to the one transmission unit (22) is/are controlled in order to bring about a desired load point shift for the internal combustion engine (12).

## Revendications

1. Procédé destiné au fonctionnement d'une chaîne cinématique hybridée (10) de boîte de vitesses à double embrayage qui présente un moteur (12) à combustion interne, un ensemble d'embrayage double présentant un premier et un deuxième embrayage (30, 20) à friction, une première transmission partielle (32) qui contient plusieurs rapports de transmission, une deuxième transmission partielle (22) qui contient plusieurs rapports de transmission, ainsi qu'une machine électrique (40) qui est raccordée ou peut être raccordée à l'une des transmissions partielles, et dans lequel, en fonctionnement hybride dans lequel
- l'énergie d'entraînement est transférée depuis la machine électrique (40) par l'intermédiaire de la transmission partielle (22),
- l'énergie d'entraînement est transférée depuis le moteur (12) à combustion interne par l'intermédiaire de l'autre transmission partielle (32), l'embrayage (32) à friction associé à l'autre transmission partielle (32) étant fermé et
- l'embrayage à friction (20) associé à la transmission partielle (22) est ouvert,
une transmission partielle (22) est sortie d'un rapport de transmission source (G2; G4) par les étapes suivantes :
- fermeture (S1) de l'embrayage à friction (20) associé à la transmission partielle (22) de telle sorte que cet embrayage à friction (20) puisse transmettre un couple de rotation (T_{RK2}) qui correspond au couple d'entraînement (T_{EM}) délivré par la machine électrique (40), et ensuite
- engagement (S2) du rapport de transmission source (G2; G4) dans la transmission partielle (22).

2. Procédé selon la revendication 1, dans lequel après la sortie (S2) hors du rapport de transmission source (G2; G4), le couple d'entraînement (T_{EM}) délivré par la machine électrique (40) est modifié (S3) jusqu'à ce que la vitesse de rotation (n_{TG2}) à l'entrée de la transmission partielle (22) soit adaptée à la vitesse de rotation (n_{TG1}) à l'entrée de l'autre transmission partielle (32).

3. Procédé selon les revendications 1 ou 2, dans lequel après la sortie (S2) hors du rapport de transmission source (G2; G4), l'embrayage à friction (20) associé à la transmission partielle (22) est de nouveau fermé ou reste fermé jusqu'à ce que la vitesse de rotation (n_{TG2}) à l'entrée de la transmission partielle (22) soit adaptée à la vitesse de rotation (n_{TG1}) à l'entrée de l'autre transmission partielle (32).

4. Procédé selon les revendications 2 ou 3, dans lequel à la fin ou après l'adaptation de la vitesse de rotation, l'embrayage à friction (20) associé à la transmission partielle (22) est ouvert (S4a) et le couple d'entraînement (T_{EM}) délivré par la machine électrique (40) est réduit (S4b) de telle sorte qu'il soit possible d'engager un rapport de transmission cible (G4; G2) dans la transmission partielle (22).

5. Procédé selon la revendication 4, dans lequel pendant ou après la réduction (S4b) du couple d'entraînement (T_{EM}) délivré par la machine électrique (40), la vitesse de rotation de la machine électrique (40) est réduite (S5) à une vitesse de rotation qui correspond à la vitesse de rotation de synchronisation du rapport de transmission cible et ensuite le rapport de transmission cible (G4; G2) est engagé (S6) dans la transmission partielle (22).

6. Procédé selon les revendications 1 ou 2, dans lequel après la sortie (S2) hors du rapport de transmission source (2), le couple d'entraînement délivré par la machine électrique (40) est augmenté (S3) pour augmenter la vitesse de rotation (n_{TG2}) à l'entrée de la transmission partielle (22) et délivrer un couple de soutien.

7. Procédé selon la revendication 1, dans lequel après la sortie (S2) hors du rapport de transmission source (G2; G4), le couple d'entraînement (T_{EM}) délivré par la machine électrique (40) est modifié (S3') jusqu'à ce que la vitesse de rotation (n_{TG2}) à l'entrée de la transmission partielle (22) s'approche d'une vitesse de rotation cible pour un rapport de transmission cible (G4; G2) dans la transmission partielle (22).

8. Procédé selon la revendication 7, dans lequel après l'étape d'approche de la vitesse de rotation, le couple d'entraînement (T_{EM}) délivré par la machine électrique (40) est établi (S5') à une valeur qui correspond au couple de rotation (T_{RK2}) qui peut être transmis par l'intermédiaire de l'embrayage à friction (20) associé à la transmission partielle (22) pour maintenir la vitesse de rotation (n_{TG2}) à l'entrée de la transmission partielle (22) au niveau de la vitesse de rotation cible et pouvoir engager le rapport de transmission cible (G4; G2).

9. Procédé selon l'une des revendications 1 à 8, dans lequel après la sortie hors du rapport de transmission source (G2; G4), un rapport de transmission cible (G4; G2) est engagé dans la transmission partielle (22) et dans lequel après l'engagement (S6) du rapport de transmission cible (G4; G2) dans la transmission partielle (22), le couple d'entraînement (T_{EM}) délivré par la machine électrique (40) est établi à un couple cible.

10. Procédé selon l'une des revendications 1 à 9, dans lequel après la sortie hors du rapport de transmission source (G2; G4), un rapport de transmission cible (G4; G2) est engagé dans la transmission partielle (22) et dans lequel après l'engagement (S6) du rapport de transmission cible (G4; G2) dans la transmission partielle (22), l'embrayage à friction (22) associé à la transmission partielle (22) est ouvert.

11. Procédé selon l'une des revendications 1 à 10, dans lequel après la sortie hors du rapport de transmission source (G2; G4), un rapport de transmission cible (G4; G2) est engagé dans la transmission partielle (22) et dans lequel pendant le changement de rapport de transmission dans la transmission partielle (22), l'énergie d'entraînement est transférée du moteur (12) à combustion interne par l'intermédiaire de l'autre transmission partielle (32).

12. Procédé selon la revendication 1, dans lequel après la sortie hors du rapport de transmission source (3), la machine électrique (40) et/ou l'embrayage à friction (20) associé à la transmission partielle (22) sont commandés de manière à provoquer un déplacement souhaité du point de charge du moteur (12) à combustion interne.
